# EUROPEAN PATENT SPECIFICATION

(11) **EP 1 353 570 B1**
(45) Date of publication and mention of the grant of the patent: **01.09.2004**
(21) Application number: 01273484.4
(22) Date of filing: 06.12.2001
(51) Int. Cl.: A23L 2/76, A23L 1/015, A23L 1/212

(54) **METHOD FOR DEAERATING FOOD PUREE, AND DEAERATOR**
VERFAHREN ZUR ENTLUEFTUNG VON LEBENSMITTELPUREE SOWIE ENTLUEFTER
PROCEDE POUR DESAERER DES ALIMENTS EN PUREE ET DESAERATEUR

(30) Priority: 26.01.2001 IT PR20010009
(43) Date of publication of application: 22.10.2003
(73) Proprietor: Bertocchi, Alessandro, 43100 Parma (IT)
(72) Inventor: Bertocchi, Alessandro, 43100 Parma (IT)
(74) Representative: Gotra, Stefano
(86) International application number: PCT/IT2001/000619
(87) International publication number: WO 2002/058489

(56) References cited:
- EP-A- 0 265 678
- EP-A- 0 850 572
- US-A- 2 151 644
- US-A- 3 873 753
- US-A- 4 022 922
- US-A- 5 171 598

## Description

### TECHNICAL FIELD AND BACKGROUND ART.

The present invention relates to a method for deaerating food puree and to a deaerator. Currently, to extract juices and purees from food products, generally the product is subjected to cold trituration and subsequently heated with the purpose of effecting an enzymatic deactivation of the triturated product which then ends in a straining or refining machine to separate the puree from the waste (peels, seeds, stalks, ...).

European patent EP 0 850 572 by the same Applicant discloses a method for enzymatic deactivation pertaining to the extraction of juices or purees from food products which provides for extracting the puree or juice at ambient temperature and then heating it in a recirculation loop at such a temperature as to obtain the enzymatic deactivation of the puree or of the juice, wherein said heating takes place at greater than ambient pressure. The plant comprises a straining machine which receives the whole or pre-treated and softened product and extracts juice or puree therefrom, to feed the recirculation loop in which the puree or juice circulates at such a temperature as to cause the enzymatic deactivation, a pump for feeding the puree or juice (which egresses from the straining machine at ambient temperature) in the recirculation circuit at greater than ambient pressure balanced by a counter-pressure device.

The recirculation circuit is maintained constantly full to prevent contacts of the puree or juice with air and for this reason no accumulation tanks or intermediate tanks for thermal breaks are provided.

However, in the straining machine the product may absorb air and hence during the time elapsing between the egress of the puree from the straining machine and its entry in the enzymatic deactivator (about 4-5 seconds) it may oxidise.

Therefore, to deaerate the puree it is sent to a traditional deaerator located after the deactivator, which works with a lower degree of vacuum than the vaporisation pressure of the product at the entry temperature.

US 5171598 dicloses a process for deactivating enzymes in fruit and vegetables wherein there is a mincing or trituration to break up the tomato and the tomato is sent into a tank whose interior is mainained in a state of vacuum, before entering a pressurized circuit for an enzyme deactivation stage.

However said solution does not solve the problems of prior art and does not get the aims of the present invention.

### DISCLOSURE OF THE INVENTION.

The aim of the present invention is to eliminate the aforesaid drawbacks and to make available a deaeration method and a deaerator of the puree in such a way as to assure the absence of absorbed air and thus prevent the puree itself from oxidising.

Said aims are fully achieved by the method and by the deaerator of the present invention, which are characterised by the content of the claims set out below, and in particular in that the method provides for the deaeration of the puree or of the juice in the intermediate phase of passage between the straining machine and the enzymatic deactivation plant, and not subsequently to the enzymatic inactivation, as was the case in the prior art.

The deaerator works with the maximum possible vacuum at an internal pressure whereto corresponds a vaporisation temperature of the product that is lower than the temperature of the incoming product.

To obtain the deaeration, the product enters at a temperature slightly exceeding the vaporisation temperature given by the vacuum in the deaerator. Since said degree of vacuum, with normal pumps and accessories available on the market, corresponds to product vaporisation temperatures exceeding ambient temperature, the need arises to heat the incoming product to make it exceed the vaporisation temperature threshold defined by the degree of vacuum of the tank. Said increase in the temperature of the product egressing from the straining machine is obtained in the following manner; a part of juice or puree egressing from the enzymatic deactivator at a temperature T₃ is brought back to re-enter the deaerator so that, mixing in a controlled manner into the flow with juice or puree at a temperature T₀<T₃, it determines a temperature T₁ of the juice or puree entering the deaerator that is only slightly higher than the vaporisation temperature T₂ inside the deaerator, which depends on the pressure set inside the deaerator.

### BEST MODE FOR CARRYING OUT THE INVENTION.

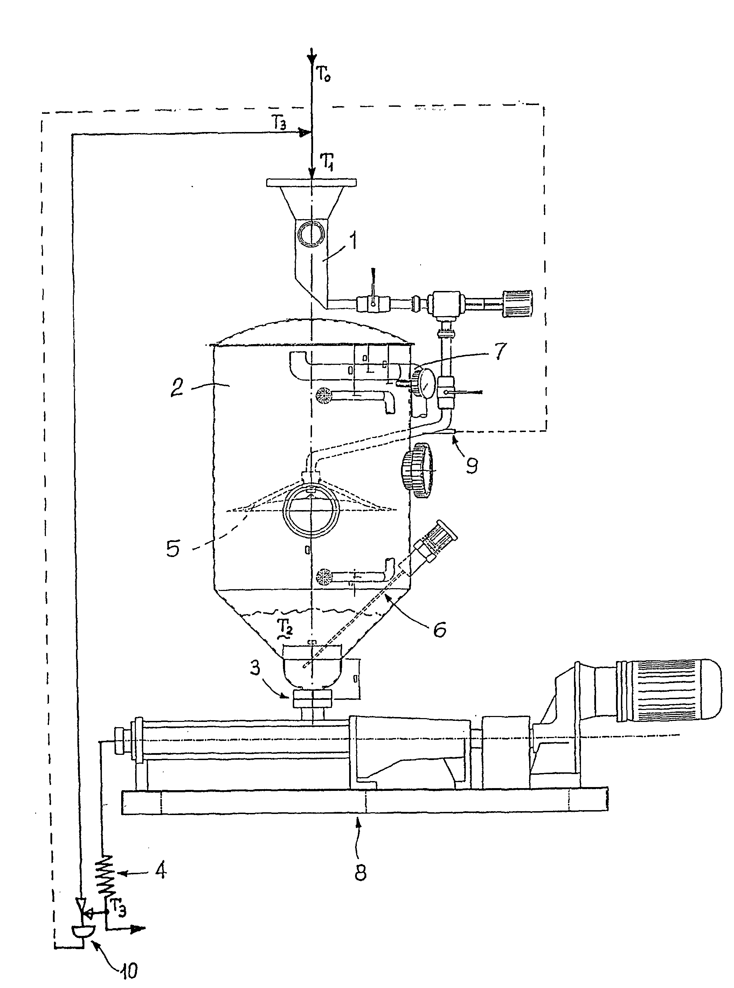

This and other characteristics shall become more readily apparent from the description that follows of a preferred embodiment illustrated, purely by way of non limiting example, in the accompanying drawing table, in which the sole figure shows a front view of the device.

With reference to the figure, the number 1 indicates a conduit for feeding puree or juice towards a deaerator 2 whose outlet 3 is directly connected to a pump 8 which extracts the product from the deaerator and feeds it to an enzymatic deactivator 4 (of the kind, for instance, described in the aforementioned EP 0 850 572 and to a recirculation loop described farther on.

The feeding conduit 1 receives the puree or juice from a straining or refining machine, not shown and of a known kind, or by a pump positioned downstream of the straining machine to evacuate the product therefrom.

Entry into the deaerator occurs on a plate 5 slightly convex upwards, i.e. towards the entry of the puree.

The reference number 6 indicates a known level measuring device, whilst the number 7 indicates a conduit connected to a vacuum pump for the extraction of air and vapour from the deaerator.

The puree egresses from the straining machine at a temperature To corresponding to the ambient temperature of the space wherein the product to be processed is stored (normally about 10°C) and it enters the deaerator at a velocity of about 3 m/s and therefore the passage from the straining machine to the enzymatic deactivator is particularly rapid and lasts only a few seconds.

The enzymatic deactivator 4 heats the product egressing from the deaerator to a certain temperature T₃ (normally between 85 °C and 95°C and preferably about 95°C). Part of said juice or puree is brought back to re-enter the deaerator in such a way that, mixing in a controlled manner in the flow with juice or puree at a temperature T₀<T₃, it determines a temperature T₁ of the juice or puree actually entering the deaerator that is only slightly greater than the vaporisation temperature T₂ inside the deaerator, which depends on the pressure (or degree of vacuum) set inside the deaerator.

T₂ is substantially the temperature of the product after the "flash", i.e. the working temperature of the deaerator.

In regard to the values of T₁ e T₂, they are about 35-65°C for T₁ and 30-60°C for T₂, which is normally lower than T₁ by just a few degrees.

To assure that the deaerator works in the best conditions, it is necessary to cause T₁ ≥ T₂ + 5ö10°C.

The degree of vacuum in the deaerator is adjusted and a quantity of recirculation puree or juice is mixed that yields a temperature T, slightly higher than the corresponding set temperature T₂.

The reference number 9 schematically indicates means for adjusting the flow rate of juice or puree at temperature T₃ that is mixed with that at temperature T₀, constituted for instance by a device that measures the temperature T₁ at the inlet into the deaerator and transmits said value to a valve 10 at the outlet of the enzymatic deactivator in order to regulate the flow rate of the juice at temperature T₃.

## Claims

1. Method for deaerating food puree or juice, wherein between the egress of the puree or juice from a straining or refining machine, with or without the use of a pump for extracting the puree or juice, and its entry into a subsequent enzymatic deactivator a stage of deaerating the puree or juice is provided, **characterised in that** a part of juice or puree egressing from the enzymatic deactivator at a temperature T₃ is brought back to re-enter the deaerator in such a way that, mixing in a controlled manner in the flow with juice or puree at a temperature T₀<T₃, it determines a temperature T₁ of the juice or puree entering the deaerator that is only slightly higher than the temperature T₂ of vaporisation inside the deaerator, which depends on the pressure set inside the deaerator.

2. Method as claimed in claim 1, wherein T₂ is about 30-60°C.

3. Method as claimed in claim 1, wherein T₁ is about 35-65°C.

4. Deaerating plant, **characterised in that** it comprises a deaerator interposed between a straining or refining machine wherefrom it receives puree or juice directly or through a pump, and an enzymatic deactivator which heats the juice or puree egressing from the deaerator to a certain temperature T₃ and brings it back to re-enter the deaerator in such a way that, mixing in a controlled manner in the flow with juice or puree at a temperature T₀<T₃, it determines a temperature T₁ of the juice or puree entering into the deaerator which is only slightly higher than the temperature T₂ of vaporisation inside the deaerator; means for controlling the flow rate of the juice or puree at temperature T₃ which is mixed with the juice or puree at temperature T₀.

## Patentansprüche

1. Verfahren zur Entlüftung von Lebensmittelpuree oder -saft, bei dem zwischen dem Austritt des Purees oder Saftes aus einer Passier- oder Verarbeitungsmaschine -gegebenenfalls unter Einsatz einer Pumpe zum Abziehen des Purees oder Saftes- und seinem Eintritt in eine angeschlossene Vorrichtung zur enzymatischen Inaktivierung eine Entlüftungsstufe des Purees oder Saftes vorgesehen ist, **dadurch gekennzeichnet, dass** ein Teil des mit einer Temperatur T3 aus der Vorrichtung zur enzymatischen Inaktivierung austretenden Saftes oder Purees in den Entlüfter zurückgeleitet wird, so dass es durch durchsatzgesteuertes Vermischen mit eine Temperatur von T0<T3 aufweisendem Saft oder Puree eine Temperatur T1 des in den Entlüfter eintretenden Saftes oder Purees bedingt, die nur leicht über der in dem Entlüfter herrschenden Eindampfungstemperatur T2 liegt, welche von dem Druck im Entlüfter abhängt.

2. Verfahren nach Anspruch 1, bei dem T2 etwa zwischen 30-60°C liegt.

3. Verfahren nach Anspruch 1, bei dem T1 etwa zwischen 35-65°C liegt.

4. Entlüftungsanlage, **dadurch gekennzeichnet, dass** sie einen Entlüfter umfasst, der zwischen einer die Anlage direkt oder über eine Pumpe mit Puree oder Saft speisenden Passier- oder Verarbeitungsmaschine und einer Vorrichtung zur enzymatischen Inaktivierung angeordnet ist, die den aus dem Entlüfter austretenden Saft oder das Puree auf eine bestimmte Temperatur T3 erwärmt und das Puree oder den Saft in den Entlüfter zurückleitet, so dass es durch durchsatzgesteuertes Vermischen mit eine Temperatur von T0<T3 aufweisendem Saft oder Puree eine Temperatur T1 des in den Entlüfter eintretenden Saft oder Purees bedingt, die nur leicht über der in dem Entlüfter herrschenden Eindampfungstemperatur T2 liegt, sowie Mittel zur Steuerung des eine Temperatur T3 aufweisenden Saft- oder Pureedurchsatzes, der mit dem eine Temperatur T0 aufweisenden Saft oder Puree vermischt wird.

## Revendications

1. Procédé pour désaérer des aliments en purée ou en jus, dans lequel, entre la sortie de la purée ou du jus de la machine de filtrage ou de raffinage, avec ou sans l'emploi d'une pompe d'extraction de la purée ou du jus, et son entrée dans un successif désactivateur enzymatique, est prévue une phase de désaération de la purée ou du jus, **caractérisé en ce qu'**une partie du jus ou purée sortant du désactivateur enzymatique à une température T₃ est renvoyée vers l'entrée du désaérateur de manière à ce que, en se mélangeant de manière contrôlée au flux de jus ou purée à une température T₀<T₃, elle détermine une température T₁ du jus ou purée entrant dans le désaérateur légèrement inférieure à la température T₂ de vaporisation à l'intérieur du désaérateur, qui dépend de la pression appliquée à l'intérieur du désaérateur.

2. Procédé selon la revendication 1, dans lequel T₂ est d'environ 30-60°C.

3. Procédé selon la revendication 1, dans lequel T₁ est d'environ 35-65°C.

4. Installation de désaération, **caractérisée en ce qu'**elle comprend un désaérateur interposé entre une machine de filtrage ou raffinage, de laquelle il reçoit la purée ou le jus directement ou par l'intermédiaire d'une pompe, et un désactivateur enzymatique qui chauffe le jus ou la purée sortant du désaérateur à une certaine température T₃ et le renvoie en arrière pour entrer de nouveau dans le désaérateur de manière à ce que, en se mélangeant de manière contrôlée avec le flux de jus ou de purée à une température T₀<T₃, il détermine une température T₁ du jus ou de la purée entrant dans le désaérateur légèrement inférieure à la température T₂ de vaporisation à l'intérieur du désaérateur; des moyens pour contrôler le débit du jus ou de la purée à température T₃ mélangé au jus ou purée à température T₀.
